# EUROPEAN PATENT APPLICATION

(11) **EP 4 772 885 A1**
(43) Date of publication of application: **08.07.2026**
(21) Application number: 24859090.3
(22) Date of filing: 12.06.2024
(51) Int. Cl.: G01N 35/04

(54) **CONTAINER SUPPLY DEVICE**

(30) Priority: 25.08.2023 JP 2023136971
(71) Applicant: HITACHI HIGH-TECH CORPORATION, Tokyo 105-6409 (JP)
(72) Inventor: AZUMA, Shinji, Tokyo 105-6409 (JP); WATANABE, Hiroshi, Tokyo 105-6409 (JP); KOBAYASHI, Tooru, Tokyo 105-6409 (JP)
(74) Representative: Strehl & Partner mbB
(86) International application number: PCT/JP2024/021349
(87) International publication number: WO 2025/047044

(57) **Abstract**

In order provide a container supply device in which container blockage hardly occurs even when a container is in an abnormal orientation during conveyance, the present invention is provided with the following configuration. A container supply device wherein a container conveyance unit comprises: an annular belt; a sorting member that is provided on the annular belt and is capable of sorting and placing tubular containers one by one; a cover part that has a forward path along which the annular belt is rotated in one direction and the sorting member moves upward, that has a belt rotation mechanism forming a return path along which the sorting member moves downward, and that covers at least a portion of the return path; and an opening which is provided to the cover part and through which the tubular containers can pass.

## Description

### Technical Field

The present invention relates to a container supply device for supplying a tubular container such as a specimen container, a disposable cuvette, or a disposable tip.

### Background Art

Automatic analyzers that automatically perform qualitative and quantitative analyses on biological samples such as blood and urine are widely used mainly in hospitals and test centers. In a test center that undertakes analyses from hospitals and clinics in regions and rapidly analyzes a large number of specimens, it is particularly required to increase the number of analyses per unit time (high throughput).

Therefore, along with increasing a speed of the automatic analyzer itself, there is also a demand for increasing a speed of a container supply device that automatically supplies, to the automatic analyzer and a specimen pretreatment device, consumables used in the automatic analyzer, for example, a specimen container (test tube) containing a specimen, a disposable tip attached to a tip end of a dispensing nozzle to prevent contamination during specimen dispensing, a disposable cuvette (reaction container) for reacting a specimen with a reagent, and the like.

One of problems in increasing the speed of the container supply device is that the container is blocked (jammed) on a conveyance path for some reason. When a jam occurs, the analyzer has to be stopped until the blocked container is removed, which may influence the analysis in the automatic analyzer. As an invention for preventing a jam, PTL 1 discloses a technique of preventing a posture abnormality of a container discharged from a container (cuvette) discharge unit and reducing an occurrence of a jam by devising a shape of a placement member provided on an annular belt that conveys the container.

### Citation List

### Patent Literature

PTL 1: JP2015-219012A

### Summary of Invention

### Technical Problem

In the technique described in PTL 1, the occurrence of container blockage is reduced by preventing the posture abnormality of the container, but no consideration is given to a countermeasure in a case where the posture abnormality occurs. Since the container in which the posture abnormality has occurred is blocked on the conveyance path, there is still a problem that an operator performs an operation of removing a cover of the annular belt, removing the blocked container, and returning the cover, and the supply of the container is stopped during the operation.

An object of the invention is to provide a container supply device in which container blockage less likely to occur.

### Solution to Problem

A configuration of the invention for achieving the above object is as follows.

A container supply device includes: a container storage unit configured to store a plurality of tubular containers; a container conveyance unit configured to convey the tubular containers stored in the container storage unit; and a container alignment unit configured to align the tubular containers conveyed from the container conveyance unit. The container conveyance unit includes an annular belt, a division member provided on the annular belt and configured to divide and place the tubular containers one by one, a belt rotation mechanism configured to form a forward path through which the division member moves upward by rotating the annular belt in one direction, and a return path through which the division member moves downward, a cover portion configured to cover at least a part of the return path, and an opening configured to allow the tubular containers provided in the cover portion to pass.

### Advantageous Effects of Invention

According to the invention, it is possible to provide a container supply device in which container blockage less likely to occur.

### Brief Description of Drawings

[FIG. 1] FIG. 1 is a diagram showing examples of a tubular container as a subject according to the invention.
[FIG. 2] FIG. 2 is a diagram showing an example of a configuration of a container supply device according to the invention.
[FIG. 3A] FIG. 3A is a diagram illustrating a reason why a vertical tubular container is discharged through an opening.
[FIG. 3B] FIG. 3B is a diagram illustrating a reason why the vertical tubular container is discharged through the opening.
[FIG. 3C] FIG. 3C is a diagram illustrating a reason why the vertical tubular container is discharged through the opening.
[FIG. 3D] FIG. 3D is a diagram illustrating a reason why the vertical tubular container is discharged through the opening.
[FIG. 3E] FIG. 3E is a diagram illustrating a reason why the vertical tubular container is discharged through the opening.
[FIG. 4] FIG. 4 is a diagram illustrating a dimensional relationship of the container supply device according to the invention.
[FIG. 5] FIG. 5 shows an example of the configuration of the container supply device according to the invention.
[FIG. 6] FIG. 6 shows an example of the configuration of the container supply device according to the invention.
[FIG. 7] FIG. 7 shows an example of the configuration of the container supply device according to the invention.
[FIG. 8] FIG. 8 is a diagram showing a container supply device having no opening 211 in the related art.

### Description of Embodiments

Hereinafter, a container supply device according to an embodiment of the invention will be described with reference to the drawings. In the drawings, the same members are denoted by the same reference numerals. Further, the invention is not necessarily limited to the following embodiments.

### [Example 1]

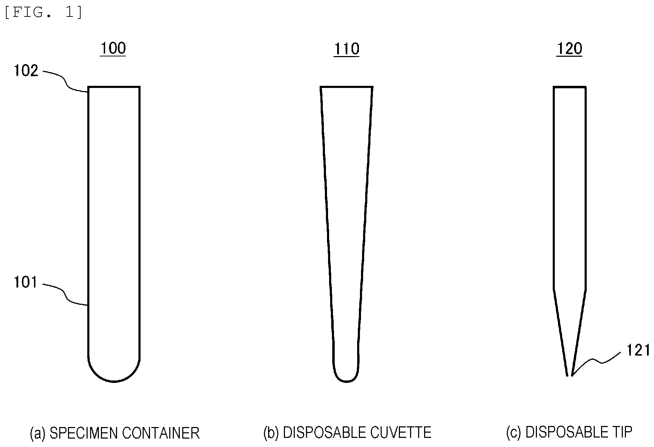

A container to be supplied by a container supply device as a subject according to the invention will be described with reference to FIG. 1. FIG. 1 shows a specimen pretreatment device that performs pretreatment on a specimen such that the specimen can be analyzed by an automatic analyzer, and a container used in the automatic analyzer. The pretreatment includes a centrifugation treatment for separating a serum component from blood, a dispensing treatment for subdividing and dispensing a primary specimen into a plurality of aliquot specimens, and a barcode attaching treatment for attaching a barcode for identifying a specimen container to a container.

The container generally has a so-called test tube shape shown in (a) of FIG. 1, but the container may have a shape in which a part of an outer peripheral portion of the test tube is thickened to facilitate handling of the container (particularly in a case of robot conveyance) in order to facilitate gripping of the container. In addition, the container may also have a shape in which a flange is provided at an opening of the test tube. Further, the invention is also applicable to containers other than the specimen container containing the specimen. For example, the invention is also applicable to a container such as a reaction container (disposable cuvette) for reacting a specimen and a reagent ((b) of FIG. 1). The invention is also applicable to a disposable tip ((c) of FIG. 1) to be attached to a tip end of a specimen dispensing nozzle in order to avoid mixing of different specimens, so-called contamination.

The container expressed as a "tubular container" in CLAIMS includes any container that can be included in a range as long as long as at least a part of the container has a tubular shape and can be conveyed by an annular belt to be described later. The container may be a container to be repeatedly used, or may be a disposable container.

A container 100 in (a) of FIG. 1 is formed in a bottomed cylindrical shape, and includes a body portion 101 and a neck portion 102. Examples of a material of the container 100 include a resin and a glass. In addition, the container 100 is formed to be transparent or translucent.

One end portion of the body portion 101 in an axial direction forms a bottom of the container 100 and is formed in a substantially hemispherical shape. The neck portion 102 is provided at the other end portion of the body portion 101 in the axial direction. An outer diameter of the neck portion 102 is equal to or larger than an outer diameter of the body portion 101. When the outer diameter is large, a step is formed between the neck portion 102 and the body portion 101, and using the step, a possibility that the container falls when being gripped by a robot can be reduced.

A container 110 in (b) of FIG. 1 has a tapered shape with a smaller outer diameter as facing downward. Examples of a material of the container 110 is also include a resin and a glass, and the container 110 is formed to be transparent or translucent. The invention is also applicable to such a container that does not have a "cylindrical" shape.

A container 120 in (c) of FIG. 1 has a cylindrical shape up to the middle and a tapered shape in which an outer diameter decreases from the middle of the cylinder as facing downward, and a hole 121 through which a liquid passes is opened at a lowermost side. Examples of a material include a resin and a glass. The container 120 is formed to be transparent or translucent, or when being applied to a capacitive liquid level detection technique, may be black since conductive carbon is contained.

When an "outer diameter of the container" is expressed in CLAIMS, it refers to an average value of the outer diameter of the tapered container as shown in (b) of FIG. 1. That is, when the outer diameter of the opening is a and the outer diameter near the bottom is b, (a+b)/2 is regarded as the outer diameter. When the container has a tapered shape in the middle as shown in (c) of FIG. 1 and a ratio of the tapered shape to a container length is 1/2 or less, an outer diameter of a portion other than the tapered shape is regarded as the "outer diameter" in CLAIMS. As to be described later, the "outer diameter" in CLAIMS is a concept having a meaning in terms of a relative magnitude relationship between a gap (distance) between an upper end of a division member and a cover portion and the "outer diameter", and in light of this concept, it is considered to be appropriate to do as described above.

Next, the configuration of the container supply device according to the invention will be described.

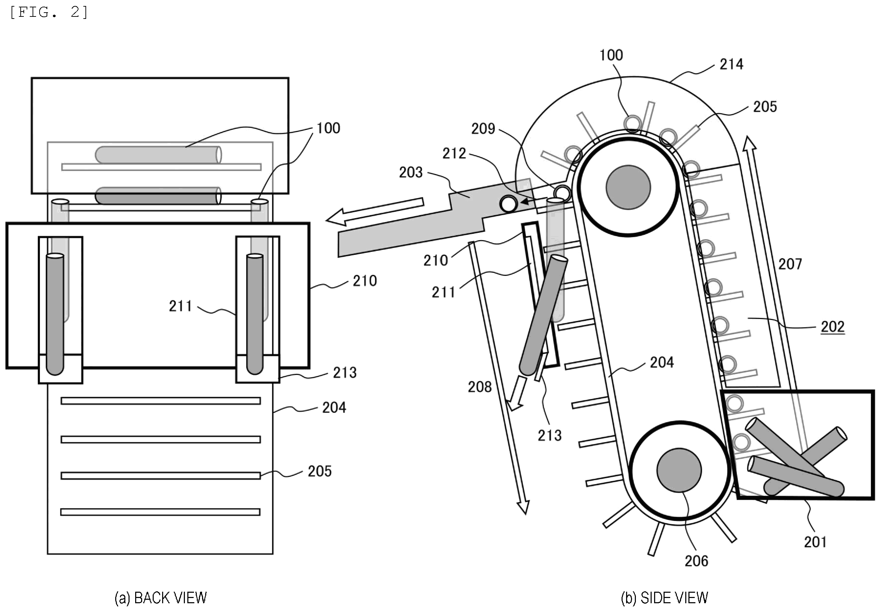

(a) of FIG. 2 is a back view of the container supply device, and (b) of FIG. 2 is a side view (perspective view) of the container supply device. The container supply device includes a container storage unit 201 that stores a plurality of tubular containers, a container conveyance unit 202, and a container alignment unit 203.

The container conveyance unit 202 includes an annular belt 204, division members 205 provided on the annular belt 204 and capable of dividing and placing the tubular containers one by one, a belt rotation mechanism 206, a forward path 207 along which the division members move upward, a return path 208 along which the division members move downward, a position 209 at which the tubular container is discharged to the container alignment unit, a cover portion 210 covering at least a part of the return path, an opening 211 provided in the cover portion, and an upper cover 214 covering a vicinity of a position at which the forward path 207 and the return path 208 of the annular belt 204 are switched.

Operations of the container supply device will be described. When the belt rotation mechanism 206 using an electric motor or the like as a driving source rotates counterclockwise in (b) of FIG. 2, the division members 205 provided on the annular belt 204 at regular intervals rotate counterclockwise. The container storage unit 201 stores a large number of tubular containers to be conveyed. Since the tubular container is transferred from a container storage unit (bag) containing the tubular container to the container storage unit by a person without any manipulation, an orientation of the tubular container inside the container storage unit is random.

When one division member 205 operates to "scoop up" those in the container storage unit, the tubular container 100 stored in the same direction as the division member 205 by chance is placed on the division member 205 (it may be more accurate to express that the tubular container 100 is "hooked" on the division member). When the division members 205 move upward with a movement of the annular belt, the tubular containers are respectively placed on a plurality of division members. However, as described above, since the orientations of the tubular containers in the container storage unit are different, the tubular containers may be placed on all of the division members 205 at continuous positions, and when the tubular containers are not properly caught, there may be the division member on which the tubular container is not placed.

In FIG. 2, a height of the division member 205 (height from a surface of the annular belt) is described to be about twice a diameter of the tubular container, but the height of the division member 205 (the height from the surface of the annular belt) is appropriately selected according to specifications of the container supply device, such as a rotation speed of the annular belt and a length of the tubular container. For example, when it is important to place only one tubular container on one division member 205, the height of the division member 205 may be about the same as an outer diameter of the tubular container. Then, even when two tubular containers face the same direction as the division member 205 by chance and the two tubular containers are hooked on the same division member, one of them falls down on the way, and thus only one of them is highly likely to be placed. For example, when the outer diameter of the tubular container is 13 mm, the height of the division member 205 (the height from the surface of the annular belt) is also designed to be around 13 mm.

In addition, when the rotation speed of the annular belt is high and there is a concern that the tubular container in the storage unit cannot be scooped up well, the height of the division member 205 is set to be larger than the outer diameter of the tubular container, so that a possibility that the tubular container is hooked can be increased. In this case, it is preferable to devise a structure of the container alignment unit such that even when two tubular containers are placed on the same division member 205, the containers can be well aligned by the container alignment unit 203 in a subsequent stage. In this manner, it is desirable that the height of the division member 205 is appropriately selected from a height about the same as the outer diameter of the tubular container to be scooped up to a height about twice the outer diameter of the tubular container depending on what is emphasized in designing.

A section along which the division member 205 moves upward is referred to as the forward path 207, and a section along which the division member 205 moves downward is referred to as the return path 208. When the division member 205 moves past the forward path 207, the tubular container 100 placed on the division member falls obliquely downward by its own weight (the tubular container slides obliquely downward while rotating). Since the container alignment unit 203 has a sliding plate provided at a predetermined angle, the tubular container 100 that slides obliquely downward moves onto the sliding plate, and the tubular containers are aligned (in (b) of FIG. 2, a longitudinal direction of the tubular container is aligned in a direction perpendicular to a paper surface).

Various mechanisms can be connected to a subsequent stage of the container alignment unit 203. For example, when a barcode labeler for attaching a barcode label to the tubular container is connected thereto, a mechanism for aligning the aligned tubular containers such that the neck portions 102 thereof are directed in the same direction, a mechanism for attaching a barcode label to each of the aligned tubular containers, and the like are added, but the mechanisms are not directly related to the invention, and thus detailed description thereof will be omitted. In FIG. 2, the container alignment unit 203 is provided in the middle of the return path 208, but may be provided in the middle of the forward path 207.

In the case of the configuration of FIG. 2, it has been found that when a moving speed of the annular belt 204 increases, the tubular container 100 may deviate (be thrown out) from the annular belt due to a rotational force (centrifugal force) of the annular belt when the tubular container 100 moves from the forward path to the return path, and some of the thrown-out tubular containers are laid horizontally in a placed state but are thrown out such that the longitudinal direction of the container is vertical (in a vertical direction).

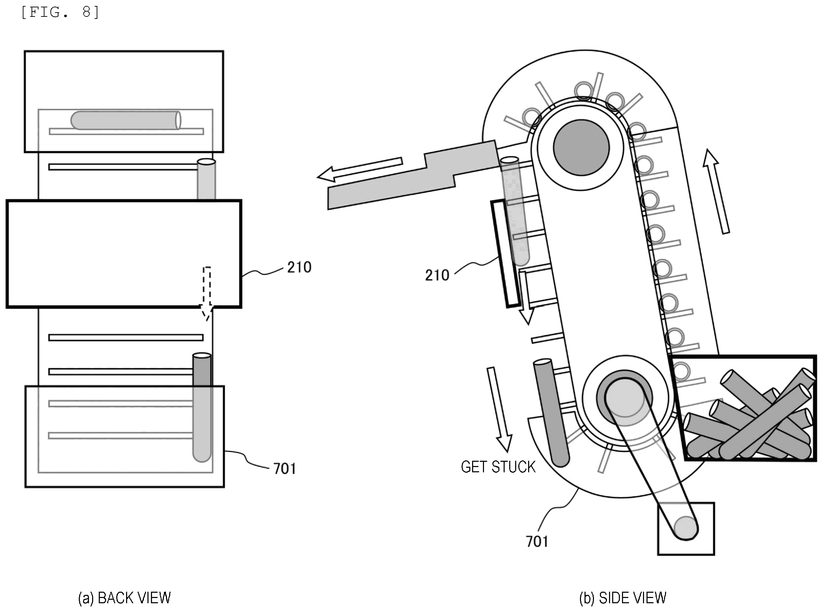

When the speed of the annular belt is increased in order to improve throughput, a probability of such tubular containers occurring increases. A problem that occurs when there is a vertical tubular container in a container supply device in the related art without the opening 211 shown in FIG. 8 will be described. Some vertical tubular containers 100 may fall through a gap between the cover portion 210 and the division member 205, and may be stuck and blocked between a lower cover 701 and the division member 205 below a return path of an annular belt. In the case of the blockage, the device must be stopped until the annular belt is stopped and the lower cover 701 is removed to take out the stuck tubular container 100.

In order to solve this problem, in the invention, as shown in FIG. 2, the opening 211 having an opening enough for the vertical container to pass through is provided in the cover portion 210. The present inventors have newly found that the blockage of the tubular container can be prevented since some of the tubular containers 100 that are vertical are discharged to the outside of the cover portion through the opening. The greatest point in the invention is that "the tubular container is discharged only by providing the opening 211 in the cover portion 210".

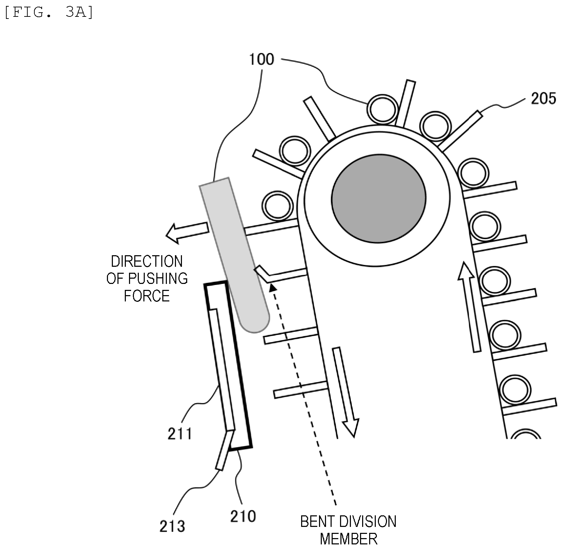

However, since the tubular container may not be properly discharged depending on the conditions, the present inventors have examined conditions for more reliably discharging the tubular container 100 by taking an image using a high-speed video camera. The examination results will be described with reference to FIGS. 3A to 3E.

FIGS. 3A to 3E are enlarged diagrams showing a vicinity of an uppermost portion of the annular belt in FIG. 2 at which the forward path and the return path in the annular belt are switched. For ease of viewing, a state in which the upper cover 214 in FIG. 2 is removed is shown. FIG. 3A shows a state in which the tubular container is vertical by being thrown out near the uppermost portion of the annular belt where the forward path and the return path are switched. The gap between the cover portion 210 and the division member 205 is equal to or less than half the outer diameter of the tubular container 100. For example, the outer diameter of the tubular container is 13 mm, and the gap is about 5 mm. Since the division member 205 is made of an elastic flexible material such as a rubber or a soft resin, the division member with which the vertical tubular container is in contact is bent. At this time, the bent division member applies a force to push an upper side of the tubular container outward (leftward in the drawing). The division member 205 does not need to be entirely made of a flexible material. Since it is only necessary that a part of the division member 205 is temporarily bent and then returns to an original shape, only a tip end (an end portion in a direction away from the annular belt) of the division member may be formed of a flexible member and may be connected to the annular belt via a member having no flexibility. For example, it may be connected to the annular belt via a metal material such as aluminum or stainless steel or a hard plastic. In addition, as the flexible material, a material having optimum elasticity for achieving the effects described in FIGS. 3A to 3E is appropriately selected in relation to a thickness (2 mm in the present example) of the division member 205. That is, it is preferable to select a soft (low elasticity) material when the thickness of the division member 205 is large, and select a hard (high elasticity) material when the thickness is small.

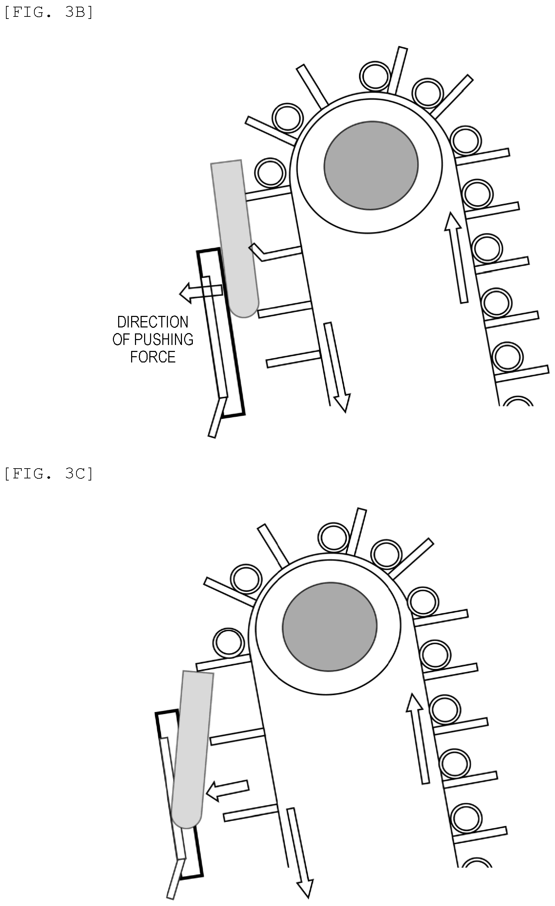

FIG. 3B shows a state in which the annular belt is further rotated from this position. As compared with FIG. 3A, when the division member 205 in contact with the tubular container is lowered, the division member 205 acts to push a lower side of the tubular container 100 outward (leftward in the drawing).

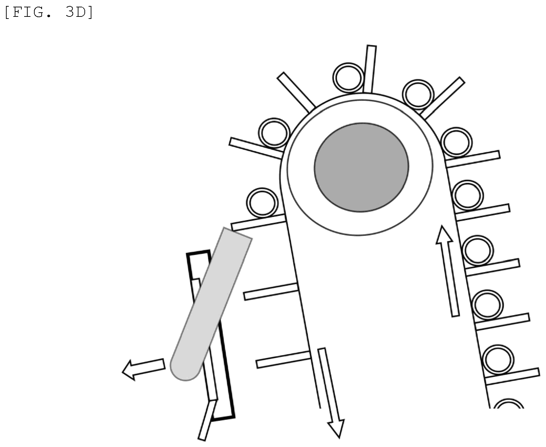

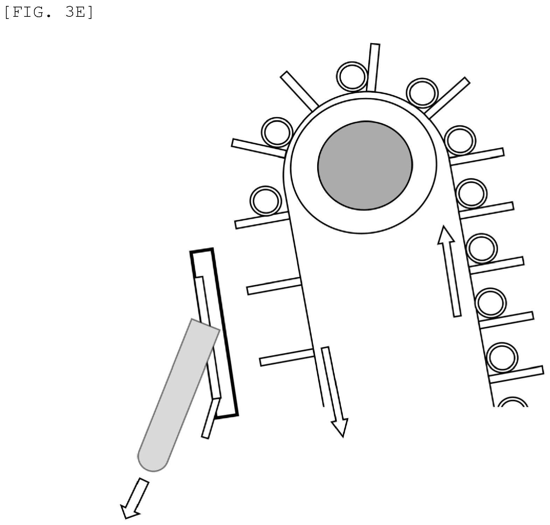

When the annular belt further rotates, as shown in FIG. 3C, an outer side (left side in FIG. 3C) of a lower tip end of the tubular container 100 moves so as to be pushed outward (leftward in FIG. 3C) through the opening 211 provided in the cover portion 210. At this time, since the bent division member 205 extends in an attempt to return to the original shape, the division member 205 pushes the tubular container outward at once, like a compressed spring returning to the original shape (FIG. 3D). The pushed tubular container 100 falls obliquely downward (FIG. 3E).

According to experiments conducted by the present inventors, it is found that the vertical tubular container does not stay at a center of the cover portion but often moves to left and right ends. Since the division member 205 always moves downward at the center of the cover portion, resistance is large for the tubular container to stay. In contrast, on left and right sides of the cover portion, the division member 205 is cut in the middle and the resistance to the stay of the tubular container is smaller than that in a center portion, which may be presumed to be the reason.

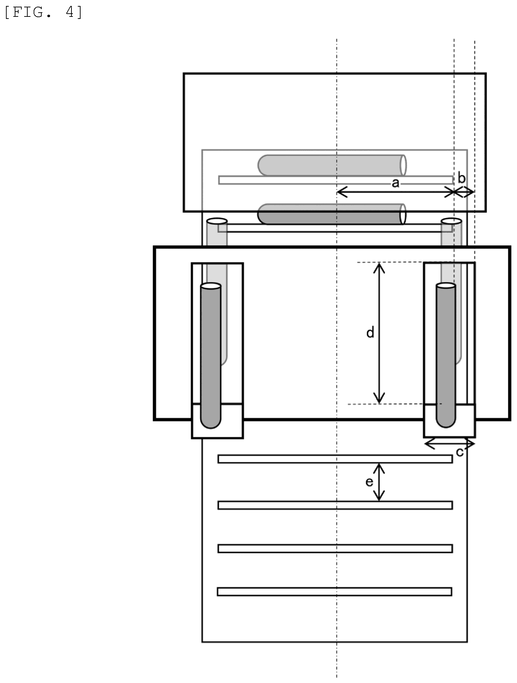

The dimensions employed in this example are shown in FIG. 4. The division member 205 has a width of 90 mm and the half length a of 45 mm. A distance b from an end portion of the division member 205 to an outermost position of the opening 211 is 7 mm. Since the outer diameter of the tubular container 100 is 13 mm, there is a space that does not interfere with the division member 205 by a half width of the outer diameter of the tubular container. It is considered that due to the presence of this space, the resistance to the stay of the tubular container is small, and the tubular container naturally moves to the left and right ends.

On the other hand, when a lateral width of the space is larger than the outer diameter of the tubular container 100, there is a possibility that some of the vertical tubular containers fall downward as they are. That is, as described above with reference to FIG. 8, there is a possibility that the lower cover 701 and the division member 205 are stuck and blocked with each other below the return path of the annular belt. Therefore, it is desirable that the lateral width of the space is smaller than the outer diameter of the tubular container, and a part of the tubular container is in contact with the division member. Further, since the tubular container is not discharged well without the space, it is desirable that the width of the space is larger than 0, that is, the space is "present". From the experimental results, it has been found that the width of the space is more preferably 1/4 or more of the outer diameter of the tubular container.

However, although the above description is based on the premise that the longitudinal direction of the tubular container 100 is oriented in the vertical direction, some tubular containers are actually oriented obliquely with respect to the vertical direction, and thus have a discharge action described with reference to FIGS. 3A to 3E even when the lateral width of the space is smaller than the outer diameter of the tubular container. It should be noted that the above is merely a desirable form.

Further, in order for the division member 205 to return to the original shape and push out the tubular container through the opening 211, it is desirable that a distance (gap) between the cover portion 210 provided with the opening 211 and an upper end of the division member 205 is smaller than the outer diameter of the tubular container 100. When the gap is larger than the outer diameter, there is a high possibility that the tubular container 100 fits in the gap, and a force for compressing the division member 205 is less likely to act. The gap between the cover portion 210 and the division member 205 is not necessarily constant over a length of the cover portion. In this case, when there is a portion where the gap is smaller than the outer diameter of the tubular container 100 in at least one location of the cover portion 210 (particularly, a cover upper end portion where the tubular container 100 is in contact with the cover portion 210 in FIG. 3A), a force for compressing the division member 205 acts, and thus the effect of the invention can be further exhibited.

In the present example, a width c of the opening is set to 20 mm, which is slightly larger than the outer diameter (13 mm) of the tubular container 100. This is to increase a probability that a lower tip end portion of the tubular container is discharged through the opening 211 since the tubular container 100 may be pushed out obliquely when the division member 205 pushes out the tubular container 100 outward (in a direction from the back to the front of the paper surface in FIG. 4) to return to the original shape. When a lateral width of the opening 211 is too large relative to the outer diameter of the tubular container 100, the tubular container 100 may be caught by the opening 211 in the case where the tubular container 100 is discharged obliquely. Therefore, experimentally, it is preferable that the lateral width of the opening 211 is 2 times or less and 1.4 times or more the outer diameter of the tubular container 100.

In this example, a height d of the opening is 60 mm, which is slightly smaller than a length of 75 mm of the tubular container 100. Since the tubular container 100 is obliquely pushed out as described above, there is no problem even when the height d of the opening is smaller than the height of the tubular container 100, but when the height d is too short, the tubular container may be caught by the opening during the discharge, and when a plurality of tubular containers 100 are simultaneously discharged, there is a possibility that the tubular containers interfere with each other and are blocked at the opening. The height d of the opening is preferably about 0.6 to 0.9 times the length of the tubular container. An interval (pitch) e between the division members is preferably smaller than the length (height) of the tubular container. This is because when the interval between the division members 205 is larger than the length of the tubular container 100, the tubular container may be conveyed vertically between the division members, and is less likely to be placed horizontally on the division member. In addition, when the pitch is large, the number of tubular containers conveyed by the annular belt decreases, and thus the conveyance efficiency decreases. The interval between the division members 205 is desirably half or more of the height of the tubular container and smaller than the height of the tubular container. In the present example, the interval between the division members 205 is 50 mm.

As described above, in the invention, it is the biggest point that "the tubular container is discharged only by providing the opening 211 in the cover portion 210", and the above dimensional relationship and the like merely indicate a preferred range. That is, it should be noted that the invention is not limited to the above dimensional relationship and the like.

In addition, it is preferable to provide a guide portion 213 extending obliquely forward (obliquely leftward in the paper surface in (b) of FIG. 2) below the opening 211 such that the tubular container is easily discharged to the outside. One opening 211 is preferably provided at each of the left and right ends of the cover portion.

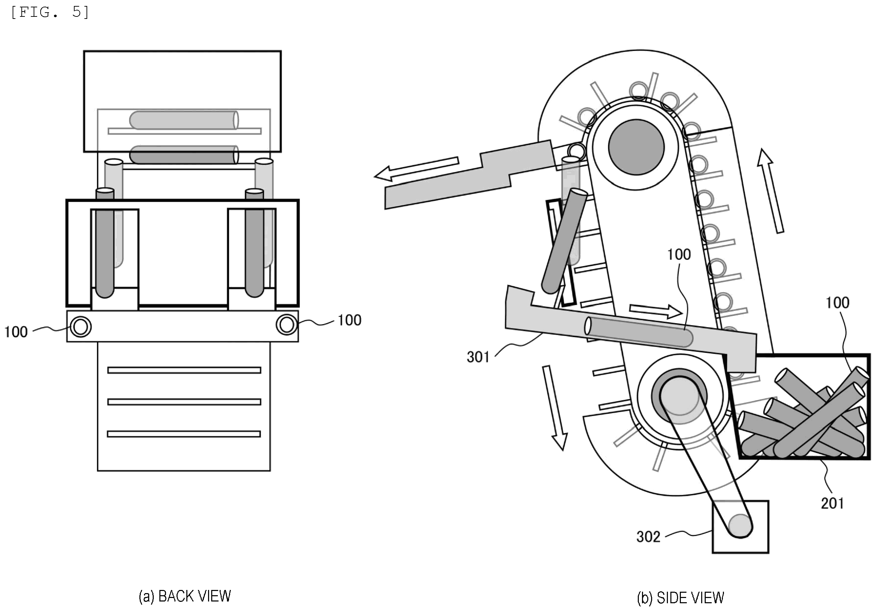

When the tubular container 100 discharged through the opening 211 is left as it is, the tubular container 100 falls on a floor surface on which the container storage device is provided, and it is troublesome to collect the tubular container 100. Therefore, it is preferable to provide a tubular container conveyance path for returning, to the container storage unit 201, the tubular container 100 discharged through the opening 211. FIG. 5 shows an outline of the container supply device provided with the tubular container conveyance path. Reference numeral 301 denotes the tubular container conveyance path. Although details of the mechanism are not shown, the tubular container discharged through the opening is slid on the tubular container conveyance path 301 and returned to the container storage unit 201. In FIG. 5, a mechanism for falling down the tubular container 100 from the conveyance path 301 to the container storage unit 201 is not shown.

As can be seen from (a) of FIG. 5, it is preferable to provide a pair of tubular container conveyance paths 301 on the left and right of the device. FIG. 5 shows an example in which the belt rotation mechanism 206 is driven by a motor 302 that is rotationally driven via a V-belt. The belt rotation mechanism 206 can employ various methods such as a method of driving by an in-wheel motor as shown in (b) of FIG. 2 and a method of driving via a belt as shown in (b) of FIG. 3.

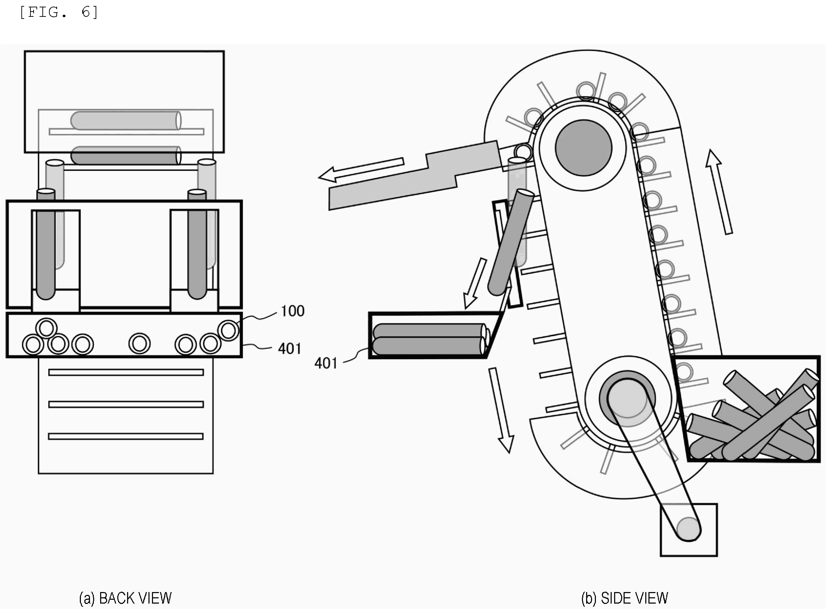

FIG. 6 shows an example in which a standby portion 401 for temporarily storing the tubular container 100 discharged through the opening 211 is provided instead of returning the tubular container 100 to the container storage unit 201. Since the structure is simplified as compared with the case where the tubular container conveyance path 301 is provided in FIG. 5, there is an advantage that the manufacturing cost is reduced. When the standby portion 401 is provided, in order to prevent the tubular container 100 from overflowing from the standby portion 401, it is preferable to provide a sensor for detecting the amount of the stored tubular containers 100 and provide a notification function for notifying a monitor screen in a control PC (not shown) for controlling the container supply device when the storage amount exceeds a preset upper limit amount. The notification method can be appropriately selected from known methods such as sounding an alarm.

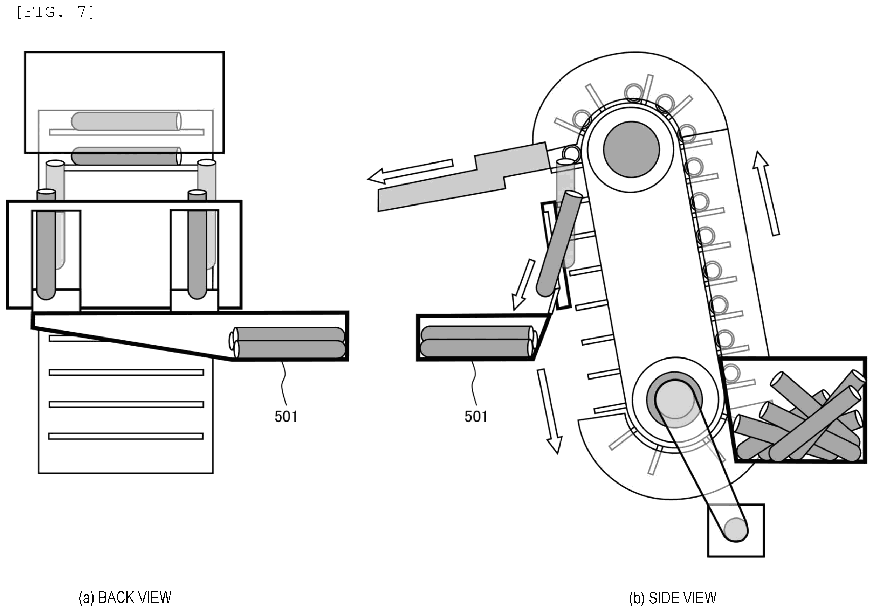

As the sensor, an optical sensor such as a photo interrupter, a weight sensor that measures a weight of the stored tubular containers, or the like can be used. FIG. 7 shows a standby portion 501 which is a modification of the standby portion 401 in FIG. 6. The tubular containers 100 stored in the standby portion 501 are gathered on a right side in (a) of FIG. 7. According to this configuration, there is an advantage that the operator can easily return the stored tubular container to the container storage unit 201.

### Reference Signs List

100: tubular container
201: container storage unit 201
202: container conveyance unit
203: container alignment unit 203
204: annular belt
205: division member
206: belt rotation mechanism
207: forward path
208: return path
209: position at which tubular container is discharged to alignment unit
210: cover portion 210
211: opening

## Claims

1. A container supply device comprising:
a container storage unit configured to store a plurality of tubular containers;
a container conveyance unit configured to convey the tubular containers stored in the container storage unit; and
a container alignment unit configured to align the tubular containers conveyed from the container conveyance unit, wherein
the container conveyance unit includes
an annular belt,
a division member provided on the annular belt and configured to be capable of dividing and placing the tubular containers one by one,
a belt rotation mechanism configured to form a forward path through which the division member moves upward by rotating the annular belt in one direction, and a return path through which the division member moves downward,
a cover portion configured to cover at least a part of the return path, and
an opening configured to allow the tubular containers provided in the cover portion to pass.

2. The container supply device according to claim 1, wherein
with the division member, the placed tubular container is conveyed on the forward path, and the tubular container is discharged to the container alignment unit on the return path.

3. The container supply device according to claim 1, wherein
the opening has a longitudinal direction and a lateral direction substantially orthogonal to the longitudinal direction, and a length in the lateral direction is smaller than a height of the tubular container.

4. The container supply device according to claim 1, wherein
the opening is provided at a right end and/or a left end of the cover portion.

5. The container supply device according to claim 1, comprising:
a conveyance path configured to allow the tubular container discharged through the opening to be conveyed to the container storage unit.

6. The container supply device according to claim 1, comprising:
a standby portion configured to cause the tubular container discharged through the opening to stand by.

7. The container supply device according to claim 6, comprising:
a notification mechanism configured to, when an amount of the tubular container standing by in the standby portion exceeds a predetermined value, notify that the amount of the tubular container standing by in the standby portion exceeds the predetermined value.

8. The container supply device according to claim 1, wherein
a distance between an end portion of the division member and an end portion of the opening located on a side opposite to the division member is smaller than an outer diameter of the tubular container and larger than 0.

9. The container supply device according to claim 1, wherein
a length of the opening in a lateral direction is 2 times or less and 1.4 times or more an outer diameter of the tubular container.

10. The container supply device according to claim 1, wherein
a length of the opening in a longitudinal direction is 0.6 to 0.9 times a length of the tubular container.

11. The container supply device according to any one of claims 1 to 10, wherein
at least a part of the division member is made of a flexible material.

12. The container supply device according to any one of claims 1 to 10, wherein
a distance between an upper end of the division member and a surface of the cover portion on a division member side is smaller than the outer diameter of the tubular container at least one location.

13. The container supply device according to any one of claims 1 to 10, wherein
an interval between the division member and division member is smaller than the length of the tubular container and equal to or larger than half of the length of the tubular container.
